# EUROPÄISCHE PATENTANMELDUNG

(11) **EP 0 997 650 A1**
(43) Veröffentlichungstag der Anmeldung: **03.05.2000**
(21) Anmeldenummer: 99810946.6
(22) Anmeldetag: 19.10.1999
(51) Int. Cl.: F16B 13/08

(54) **Spreizdübel**

(30) Priorität: 26.10.1998 DE 19849202
(71) Anmelder: HILTI Aktiengesellschaft, 9494 Schaan (LI)
(72) Erfinder: Belz, Thomas, 80689 München (DE); Werner, Michael, 81547 München (DE)
(74) Vertreter: Wildi, Roland

(57) **Zusammenfassung**

Ein Spreizdübel, insbesondere ein Hinterschnittdübel (1), besitzt eine mit einer Durchgangsbohrung (9, 10) versehene Spreizhülse (2), die in einem rückwärtigen Abschnitt (3) mit einem Innengewinde (4) ausgestattet ist und in einem gegenüberliegenden, vorderen Spreizabschnitt (5) durch axiale Schlitze voneinander getrennte Spreizlappen (6) aufweist. Die Spreizlappen (6) sind durch axiales Auftreiben der Spreizhülse (2) auf einen das Vorderende der Spreizhülse (2) überragenden Spreizkörper (12), der sich in Setzrichtung (S) im wesentlichen konisch erweitert und in der Durchgangsbohrung (10) gehalten ist, radial ausstellbar. Die Durchgangsbohrung (9, 10) ist gestuft ausgebildet und besitzt im Spreizabschnitt (5) einen kleineren Innendurchmesser (s) als in dem mit dem Innengewinde (4) versehenen, rückwärtigen Abschnitt (3). Am Übergang vom rückwärtigen Abschnitt (3) zum vorderen Spreizabschnitt (5) ist eine im wesentlichen zum rückwärtigen Ende der Spreizhülse (2) gerichtete, umlaufende Ringschulter (11) ausgebildet. Der in der Durchgangsbohrung (10) gehaltene, aussenliegende Spreizkörper (12) weist eine axiale Gesamtlänge (I) auf, die grösser ist als die Länge (k) des Spreizabschnitts (5) der Spreizhülse (2).

## Beschreibung

Die Erfindung betrifft einen Spreizdübel, insbesondere einen formschlüssig verankernden Hinterschnittdübel, gemäss dem Oberbegriff des Patentanspruchs 1.

Zur Befestigung von Bauteilen an Untergründen, wie beispielsweise Beton und Gestein, werden in der Regel Spreizdübel eingesetzt, die im wesentlichen eine Spreizhülse mit einem Spreizbereich und ein Spreizelement aufweisen, durch dessen axiale Relativverschiebung zur Spreizhülse der Spreizbereich radial aufweitbar ist. Durch die radiale Aufweitung des Spreizbereichs wird der Spreizdübel kraftschlüssig oder auch formschlüssig in ein Bohrloch verankert. In Befestigungsanwendungen, bei denen geringe Achs- und Randabstände eingehalten werden müssen, kommen vor allem formschlüssig verankernde Spreizdübel zur Anwendung, die auch als Hinterschnittsysteme bezeichnet werden. Dazu wird zunächst mit Hilfe eines Spezialwerkzeugs in der Nähe des Bohrlochgrunds eine Hinterschneidung vorbereitet. Danach wird oft eine Ankerstange mit aufgesetzter Spreizhülse in die Bohrung eingesetzt, und die Spreizlappen der Spreizhülse werden durch eine Relativverschiebung zwischen der Hülse und einem sich in Setzrichtung erweiternden Kopfteil radial ausgestellt. Die in die Hinterschneidung ausgestellten Spreizlappen bilden in der Bohrung eine formschlüssige Verbindung zum Untergrund.

Eine Variante der Hinterschnittsysteme ist ohne spezielle Werkzeuge zur Vorbereitung der Hinterschneidung verankerbar, da sie sich beim Setzvorgang selbsttätig im Untergrund einen Formschluss erzeugen. Die Erzeugung des Formschlusses erfolgt beispielsweise durch Rotation der Spreizhülse, während sie durch axiale Schläge auf ein sich in Setzrichtung erweiterndes Kopfteil aufgetrieben wird. An den Spreizlappen sind Schneiden angeordnet, die sich während des Setzvorgangs fräsend eine Hinterschneidung in der Bohrung erzeugen. Nach Abschluss des Setzvorgangs bilden die radial ausgestellten Spreizlappen in der gerade erzeugten Hinterschneidung eine formschlüssige Verankerung. Neben diesen bekannten, auf Rotation beruhenden selbstschneidenden Hinterschnittdübeln, sind auch Hinterschnittsysteme bekannt, die sich ohne Rotation der Spreizhülse einen Formschluss erzeugen. Dazu genügt es, die Spreizhülse durch axiale Schläge gegenüber einem konischen Spreizkörper zu verschieben. Dabei bearbeiten die Schneiden an den freien Vorderenden der Spreizlappen die Bohrlochwandung und tragen meisselnd Material ab. Durch die meisselnde Bearbeitung der zylindrischen Bohrlochwandung wird eine Hinterschneidung erzeugt und der Spreizdübel formschlüssig verankert.

Hinterschnittsysteme bestehen meist aus einer Ankerstange mit einem sich in Setzrichtung erweiternden Kopfteil und einer auf die Ankerstange aufgeschobenen Spreizhülse. Oft besteht auch der Wunsch nach einem formschlüssigen Befestigungssystem, das keine die Oberfläche überragenden Anschlussteile aufweist. Auf diese Weise können beispielsweise bereits Befestigungspunkte vorbereitet werden, an die erst zu einem späteren Zeitpunkt Bauteile angeschlossen werden. Derartige Hinterschnittsysteme weisen eine als Innengewindehülse ausgebildete Spreizhülse auf, die mit einer Durchgangsbohrung versehen und im Spreizbereich durch axiale Schlitze voneinander getrennte Spreizlappen aufweist. Am Vorderende der Innengewindehülse ist ein konischer Spreizkörper angeordnet, der das Vorderende der Spreizhülse überragt und mit seinem durchmesserkleineren Abschnitt in der Durchgangsbohrung gehalten ist. Zur formschlüssigen Verankerung eines derartigen Aussenkonus-Hinterschnittdübels wird die Innengewindehülse durch axiale Schläge über den sich am Bohrlochgrund abstützenden Spreizkörper getrieben. Die dabei radial ausgestellten Spreizelemente bearbeiten die Bohrlochwandung meisselnd und erzeugen dabei eine Hinterschneidung. Zum axialen Auftreiben der Spreizhülse auf den Spreizkörper wird üblicherweise mit einem Hammer direkt auf das rückwärtige Ende der Spreizhülse des in das Bohrloch eingesetzten Hinterschnittdübels geschlagen. Dabei kann es zu Beschädigungen des Gewindeeinlaufs des Innengewindes kommen. Für den Anwender besteht bei den bekannten Outcone-Dübeln weder während des Setzvorgangs noch danach eine Kontrollmöglichkeit darüber, ob die Spreizlappen der Spreizhülse im geforderten Umfang aufgespeizt sind. Dabei ist zu berückdichtigen, dass sich sowohl eine zu geringe als auch eine übermässige Aufspreizung der Spreizlappen negativ auf die erzielbaren Haltewerte auswirken kann. Zwar sind für Schlagspreizdübel mit innenliegendem Spreizkörper spezielle Setzwerkzeuge bekannt, mit denen der Spreizkörper im erforderlichen Umfang vortreibbar ist. Für Innengewindehülsen mit aussenliegendem Spreizkörper sind derartige Setzwerkzeuge jedoch nicht anwendbar.

Aufgabe der vorliegenden Erfindung ist es, einen Spreizdübel mit Spreizhülse und aussenliegendem Spreizkörper, insbesondere einen Hinterschnittdübel, zu schaffen, der einfach und ohne Gefahr, das Innengewinde, insbesondere den Gewindeeinlauf, zu beschädigen, verankerbar ist. Auf speziell ausgebildete Setzwerkzeuge soll verzichtet werden können. Dabei soll der Anwender bereits während des Setzvorgangs und auch danach Information darüber erhalten, ob die Spreizlappen im geforderten Umfang radial ausgespreizt sind und der Dübel korrekt gesetzt ist.

Die Lösung dieser Aufgaben besteht in einem Spreizdübel mit Spreizhülse und aussenliegendem Spreizkörper, der die im kennzeichnenden Abschnitt des Patentanspruchs 1 angeführten Merkmale aufweist. Der erfindungsgemässe Spreizdübel, insbesondere ein Hinterschnittdübel, besitzt eine mit einer zylindrischen Durchgangsbohrung versehene Spreizhülse, die in einem rückwärtigen Abschnitt mit einem Innengewinde ausgestattet ist und in einem gegenüberliegenden, vorderen Spreizabschnitt durch axiale Schlitze voneinander getrennte Spreizlappen aufweist. Die Spreizlappen sind durch axiales Auftreiben der Spreizhülse auf einen das Vorderende der Spreizhülse überragenden Spreizkörper, der sich in Setzrichtung im wesentlichen konisch erweitert und in der Durchgangsbohrung gehalten ist, radial ausstellbar. Die Durchgangsbohrung ist gestuft ausgebildet und besitzt im Spreizabschnitt einen kleineren Innendurchmesser als in dem mit dem Innengewinde versehenen, rückwärtigen Abschnitt. Am Übergang vom rückwärtigen Abschnitt zum vorderen Spreizabschnitt ist eine im wesentlichen zum rückwärtigen Ende der Spreizhülse gerichtete, umlaufende Ringschulter ausgebildet. Der in der Durchgangsbohrung gehaltene, aussenliegende Spreizkörper weist eine axiale Gesamtlänge auf, die grösser ist als die Länge des Spreizabschnitts der Spreizhülse.

Die erfindungsgemässe Ausbildung des Spreizdübels ermöglicht es, den Setzvorgang ohne spezielles Setzwerkzeug durchzuführen und dabei das Innengewinde, insbesondere den Gewindeeinlauf zu schonen. Zum Setzen des insbesondere als Hinterschnittdübel ausgebildeten Spreizdübels wird ein Stück Stahl, beispielsweise ein Baustahl in die Durchgangsbohrung des rückwärtigen Abschnitts der Spreizhülse eingeführt. Der Durchmesser des Stahlstücks muss nur etwas grösser gewählt sein als der Innendurchmesser der Durchgangsbohrung im Spreizabschnitt. Dadurch kann sich das Vorderende des Stahlstücks an der Ringsschulter abstützen. Durch axiale Hammerschläge auf das rückwärtige Ende des Stahlstücks wird die Spreizhülse auf den sich am Grund des Bohrlochs abstützenden Spreizkörper aufgetrieben. Die dabei radial ausgestellten Spreiz-lappen erstellen nach dem Hintermeisselprinzip in der Bohrlochwandung eine Hinterschneidung. Die Hammerschläge erfolgen auf das rückwärtige Ende des Stahlstücks. Dadurch ist die Gefahr einer Beschädigung des Gewindeeinlaufs durch Schläge auf die Rückfläche der Spreizhülse ausgeschaltet. Eine allfällige geringfügige Beschädigung des Innengewindes im an die Ringschulter angrenzenden Teil des Innengewindes spielt keine Rolle, da im allgemeinen die Länge des Innengewindes nicht vollständing ausgenutzt wird.

Durch die gewählte Länge des Spreizkörpers kann der Anwender sehr einfach erkennen, wann die Spreizlappen im geforderten Umfang aufgespreizt sind. Indem die Gesamtlänge des Spreizkörpers grösser ist als die Länge des Spreizabschnitts der Spreizhülse, ragt im vollverspreizten Zustand der rückwärtige Teil des Spreizkörpers aus der Durchgangsbohrung des Spreizabschnitts. Der Anwender merkt dies beim Setzvorgang am Rückprall des Hammers. Dadurch ist auch gewährleistet, dass die Spreizhülse nicht weiter als zulässig eingeschlagen werden kann. Eine spätere Setzkontrolle kann auf die gleiche Art erfolgen, indem ein Baustahl in den rückwärtigen Abschnitt der Spreizhüls eingeführt wird und das Rückprallen des Hammers kontrolliert wird. Alternativ dazu kann auch mit einem Messschieber oder einem genormten Prüfwerkzeug überprüft werden, ob der Spreizkörper ausreichend weit aus der Durchgangsbohrung des Spreizabschnitts ragt.

Um eine genügend grosse Auflagefläche für das zum Setzen verwendete Stahlstück bereitzustellen, erweist es sich von Vorteil, wenn der Innendurchmesser der Durchgangsbohrung im rückwärtigen Abschnitt zum Innendurchmesser der Durchgangsbohrung im Spreizabschnitt ein Verhältnis von etwa 1,3 bis etwa 6 aufweist.

In einer vorteilhaften Variante der Erfindung ist die umlaufende Ringschulter eine Kegelfläche. Der achsfernere Bereich der Kegelfläche liegt dabei dem rückwärtigen Abschnitt näher als der achsnächste Bereich. Das gedachte Zentrum der Kegelfläche weist somit in die Durchgangsbohrung des Spreizabschnitts. Durch diese konstruktive Massnahme erfolgt beim Setzvorgang eine automatische Zentrierung des eingeführten Stahlstücks. Die Hammerschläge werden in Achsrichtung eingeleitet, und es wird ein Verkippen der Spreizhülse gegenüber dem Spreizkörper verhindert.

Die Gesamtlänge des Spreizkörpers beträgt vorzugsweise etwa das Ein- bis Fünffache der Differenz der erforderlichen Bohrtiefe und der Länge der Spreizhülse. Dabei ist die Länge der Spreizhülse zu etwa dem Ein- bis Zwölffachen des Innendurchmessers der Durchgangsbohrung im rückwärtigen Abschnitt gewählt. Die erforderliche Bohrtiefe ist in jedem Fall grösser als die Länge der Spreizhülse und beträgt etwa das Zwei- bis Vierzehnfache des Innendurchmessers der Durchgangsbohrung im rückwärtigen Abschnitt.

Für die erforderlichen Setzkräfte erweist es sich von Vorteil, wenn der Spreizkörper eine im wesentlichen flaschenartige Gestalt mit wenigstens zwei Konusabschnitten aufweist, die voneinander verschiedene Konuswinkel besitzen. Ein erster, durchmesserkleinerer Konusabschnitt weist dabei einen grösseren Konuswinkel auf als der daran anschliessende durchmessergrössere Konusabschnitt. Der Konuswinkel des durchmessergrösseren Abschnitts ist vorzugsweise gleich oder kleiner als 5,71°. Bei diesem Winkel ist bei Auszugsversuchen des Spreizkörpers aus der Durchgangsbohrung Selbsthemmung gewährleistet. Als Reibungskoeffizient für Stahl auf Stahl wird dabei ein Wert µ zwischen 0,1 und 0,3 angesetzt. Der Konuswinkel des durchmesserkleineren Konusabschnitts ist etwas grösser gewählt als der des ersten Konusabschnitts. Durch diese Massnahme wird das Verhältnis des erforderlichen Verschiebewegs der Spreizhülse zur erzielbaren Hinterschnitttiefe zu kleineren und günstigeren Werten hin geschoben.

Ein an den durchmesserkleineren Konusabschnitt anschliessender Konuszapfen gewährleistet eine Führung des Spreizkörpers in der Durchgangsbohrung des Spreizabschnitts. Die axiale Länge des Konuszapfens ist dabei kleiner als die Länge des durchmesserkleineren Konusabschnitts. Es versteht sich, dass der Aussendurchmesser des Konuszapfens im wesentlichen kleiner oder gleich dem Innendurchmesser des Spreizabschnitts ist. Durch den Konuszapfen wird die Durchgangsbohrung im Spreizabschnitt nicht aufgeweitet und die Führung bleibt bis zum Ende des Setzvorgangs erhalten.

Indem der Konuszapfen eine geringfügig konvexe, beispielsweise ballige, Aussenkontur aufweist, überschreitet sein Aussendurchmesser in einem sehr kleinen Bereich geringfügig den Innendurchmesser der Durchgangsbohrung im Spreizabschnitt. Dies trägt zur Halterung des Spreizkörpers in der Durchgangsbohrung bei und dient als zusätzliche Verliersicherung für den vormontierten Spreizkörper.

Indem der Spreizabschnitt wenigstens zwei Biegestellen aufweist, die als umlaufende Ringnuten ausgebildet sind, können sich die Spreizlappen während des Setzvorgangs besser der Aussenkontur des Spreizkörpers anpassen. Dies reduziert die erforderlichen Setzkräfte, stellt eine zusätzliche Sicherung des Spreizkörpers dar und verbessert die Führung des Spreizkörpers während des Setzvorgangs. Die Ringnuten sind mit Vorteil an der Aussenfläche des Spreizabschnitts angeordnet. In einer Variante der Erfindung können die Ringnuten auch an der Innenfläche des Spreizabschnitts vorgesehen sein.

Eine Restwandstärke des Spreizabschnitts im Bereich der Ringnuten von etwa 10% bis etwa 150% des Bohrungsdurchmessers im Spreizbereich gewährleistet einserseits die radiale Verformbarkeit der Spreizlappen und stellt andererseits das Erreichen der gewünschten Haltewerte sicher, indem genügend Wandstärke verbleibt, um einen Materialbruch an den schwächsten Stellen zu verhindern.

Im folgenden wird die Erfindung unter Bezugnahme auf einen in den schematischen Zeichnungen beispielsweise dargestellten Hinterschnittdübel näher erläutert. Es zeigen:
Fig. 1 einen Axialschnitt eines erfindungsgemässen Hinterschnittdübels; und
Fig. 2 einen Axialschnitt des Hinterschnittdübels gemäss Fig. 1 im verankerten Zustand.

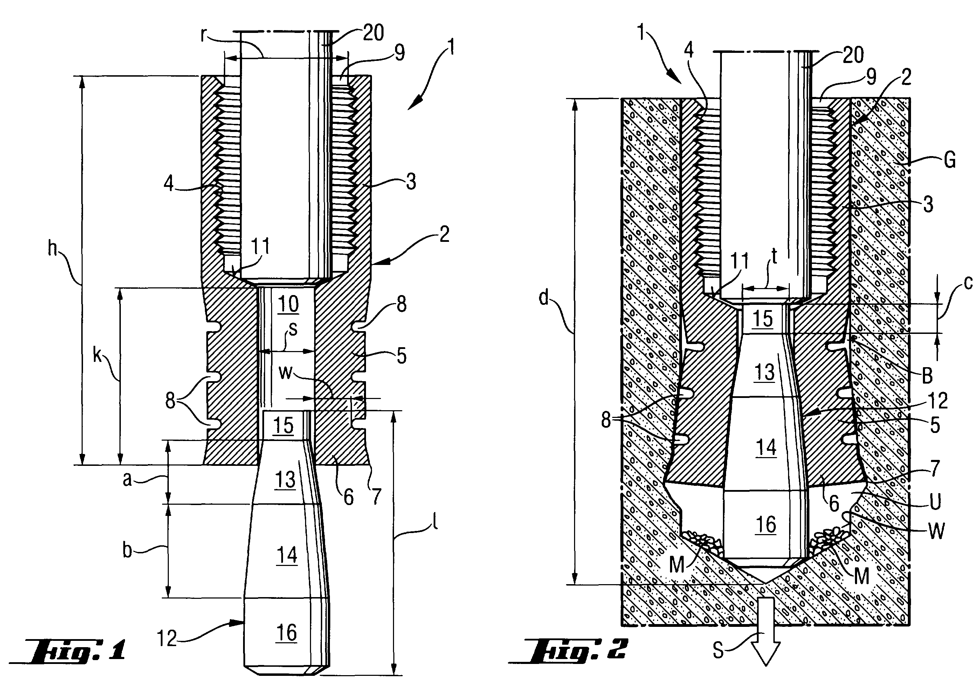

Der in Fig. 1 im Ausgangszustand und in Fig. 2 im verankerten Zustand beispielsweise dargestellte Hinterschnittdübel ist jeweils gesamthaft mit dem Bezugszeichen 1 versehen. Er umfasst eine Spreizhülse 2 mit einem rückwärtigen Abschnitt 3 und einem Spreizabschnitt 5. Die Spreizhülse 2 besitzt eine im wesentlichen zylindrische Durchgangsbohrung, die gestuft ausgebildet ist. Im rückwärtigen Abschnitt 3 der Spreizhülse 2 besitzt die Durchgangsbohrung 9 einen Innendurchmesser r. Der Innendurchmesser der Durchgangsbohrung 10 im Spreizabschnitt 5 ist mit s bezeichnet. Der Innendurchmesser r der Durchgangsbohrung 9 im rückwärtigen Abschnitt 3 ist etwa 1,3 bis etwa 6 mal grösser als der Innendurchmesser s der Durchgangsbohrung 10 im Spreizabschnitt 5. Am Übergang von der durchmessergrösseren Durchgangsbohrung 9 zur engeren Bohrung 10 im Spreizabschnitt 5 ist eine Ringfläche 11 ausgebildet, die im wesentlichen zum rückwärtigen Ende der Spreizhülse 2 orientiert ist. Die Ringfläche 11 kann, wie beispielsweise dargestellt ist, konusartig und in Richtung der Durchgangsbohrung 10 im Spreizabschnitt 5 abfallend ausgebildet sein. Sie dient beim Setzvorgang als Auflagefläche für ein Stahlstück 20, beispielsweise für ein Stück eines Bewehrungseisens.

Im rückwärtigen Abschnitt 3 ist die Spreizhülse 2 mit einem Innengewinde 4 ausgestattet, das beispielsweise den Anschluss einer Normschraube oder einer im Durchmesser genormten Gewindestange ermöglicht.

Der Spreizabschnitt 5 der Spreizhülse 2 weist ein Anzahl von durch axiale Schlitze voneinander getrennten Spreizlappen 6 auf, die an ihren freien Vorderenden mit Schneiden 7 versehen sind. Die Schneiden 7 können beispielsweise Schneideinsätze aus Hartmetall umfassen. Sie können auch durch eine spezielle Formgebung der Spreizlappen 7 allein oder mit anschliessender Härtung gebildet sein. Die Spreizhülse 2 weist eine Länge h auf, die sich von ihrem rückwärtigen Ende bis zu den Schneiden 7 erstreckt und etwa das 1-fache bis 12-fache des Innendurchmessers r der Durchgangsbohrung 9 im rückwärtigen Abschnitt 3 beträgt. An den Aussenflächen der Spreizlappen 6 sind Ringnuten 8 vorgesehen, die beim radialen Ausstellen der Spreizlappen 6 als definierte Biegestellen dienen. Im Bereich der Ringnuten 8 besitzen die Spreizlappen eine Restwandstärke w, die etwa 10% bis etwa 150% des Bohrungsdurchmessers im Spreizbereich beträgt.

Ein im wesentlichen flaschenförmiger Spreizkörper 12 ist im vormontierten Zustand in der Durchgangsbohrung 10 des Spreizabschnitts 5 gehalten. Der Spreizkörper 12 besteht aus mehreren Abschnitten, davon wenigstens zwei Konusabschnitte 13, 14, die verschiedene Längen a, b und voneinander verschiedene Konuswinkel aufweisen. Dabei besitzt der durchmesserkleinere, erste Konusabschnitt 13 mit der Länge a einen grösseren Konuswinkel als der daran anschliessende durchmessergrössere Konusabschnitt 14 mit der Länge b. An den durchmessergrösseren Konusabschnitt 14 schliesst ein im wesentlichen zylindrischer Fortsatz 16 an. Der durchmesserkleinere, erste Konusabschnitt 13 ist mit einem Konuszapfen 15 verbunden, dessen Aussendurchmesser t (Fig. 2) kleiner oder gleich dem Innendurchmesser s der Durchgangsbohrung 10 im Spreizabschnitt 5 ist. Die Länge c (Fig. 2) des Konuszapfens 15 ist kleiner als die axiale Länge a des durchmesserkleineren Konusabschnitts 13. Der Konuszapfen 15 weist eine im wesentlichen zylindrische Form auf. Er kann auch eine leicht ballige Aussenkontur besitzen, um dadurch die Halterung des vormontierten Spreizkörpers 12 in der Durchgangsbohrung 10 des Spreizabschnitts 5 zu unterstützen. Die über sämtliche Abschnitte des Spreizkörpers 12 gemessene Gesamtlänge I ist grösser als die axiale Länge k der Durchgangsbohrung 10 im Spreizabschnitt 5. Sie beträgt etwa das 1-fache bis 5-fache der Differenz der erforderlichen Bohrtiefe d (Fig. 2) und der Länge h der Spreizhülse 2. Die erforderliche Bohrtiefe d (Fig. 2) ist grösser als die Länge h der Spreizhülse 2. Sie beträgt etwa das 2-fache bis 14-fache des Innendurchmessers r der Durchgangsbohrung 9 im rückwärtigen Abschnitt 3 der Spreizhülse 2.

Das Setzen des Hinterschnittdübels 1 erfolgt mit Hilfe eines Stahlstücks 20, beispielsweise eines Bewehrungseisens oder dergleichen, das in die Durchgangsbohrung 9 im rückwärtigen Abschnitt 3 der Spreizhülse 2 eingesteckt ist. Bei der Auswahl eines geeigneten Stahlstücks 20 muss nur darauf geachtet werden, dass sein Aussendurchmesser grösser ist als der Innendurchmesser s der Durchgangsbohrung 10 im Spreizabschnitt 5. Dann liegt seine Stirnfläche an der Ringfläche 11 am Durchmesserübergang der gestuften Durchgangbohrung 9, 10 an. Durch axiale Schläge auf das rückwärtige Ende des Stahlstücks 20 wird die Spreizhülse 2 auf den sich am Grund eines Bohrlochs B im Untergrund G abstützenden Spreizkörper 12 aufgetrieben. Die an den Konusab-schnitten 13, 14 entlanggleitenden Spreizlappen 6 werden radial ausgestellt. Dabei bearbeiten die Schneiden 7 die Bohrlochwandung W meisselnd und erzeugen eine Hinterschneidung U. Das von der Bohrlochwandung W abgebaute Material M sammelt sich am Grund des Bohrlochs B. Der zylindrische Fortsatz 16 am Spreizkörper 12 schafft einen Aufnahmeraum für das abgebaute Material M. Der Spreizkörper ist über den Konuszapfen 15 in der Durchgangsbohrung 10 im Spreizabschnitt 5 geführt und dadurch am Verkippen gehindert. Die als Ringnuten 8 ausgebildeten Biegestellen an den Spreizlappen 6 sorgen für eine möglichst gute Angleichung Spreizlappen 6 an die Aussenkontur des Spreizkörpers 12. Dadurch werden die beim Aufspreizen auf die Spreiz-lappen 6 wirkenden Kräfte möglichst flächig verteilt, und lokale Druckspitzen, die zu Kaltverschweissungen führen können, werden vermieden. Das Ende des Setzvorgangs ist erreicht, sobald der Konuszapfen 15 aus der Durchgangbohrung 10 des Spreizabschnitts in die Durchgangsbohrung 9 des rückwärtigen Abschnitts 3 der Spreizhülse 2 ragt. Dabei kommt die rückwärtige Stirnfläche des Spreizkörpers 12 in Anlage zur vorderen Stirnfläche des Stahlstücks 20. Weitere axiale Schläge auf das Stahlstück 20 äussern sich als Prallschläge. Daran erkennt der Anwender, dass die Spreizhülse 2 nicht mehr weiter vorgetrieben werden kann und die Spreizlappen 6 im korrekten Umfang aufgespreizt sind. Eine Setzkontrolle zu einem späteren Zeitpunkt kann auf analoge Weise erfolgen, indem einfach ein Stahlstück 20 eingeführt wird und mit dem Hammer auf dessen rückwärtige Stirnfläche geschlagen wird. Am Rückprall des Hammers ist erkennbar, dass der Hinterschnittdübel 1 korrekt gesetzt wurde. In einer alternativen Prüfvariante können auch Setzlehren und dergleichen auf den Hinterschnittdübel 1 abgestimmte Kontrollinstrumente verwendet werden. Die festgestellte Einstecktiefe des Prüfwerkzeugs gibt Aufschluss über den korrekten Setzvorgang.

Die Erfindung wurde am Beispiel eines auf dem Meisselprinzip beruhenden, formschlüssig verankernden Hinterschnittdübels erläutert. Es versteht sich, dass die erfindungsgemässe Ausbildung auch auf kraftschlüssig verankernde Spreizdübel mit Innengewindehülse und Aussenkonus anwendbar ist.

## Patentansprüche

1. Spreizdübel, insbesondere Hinterschnittdübel, mit einer eine zylindrische Durchgangsbohrung (9, 10) aufweisenden Spreizhülse (2), die in einem rückwärtigen Abschnitt (3) mit einem Innengewinde (4) ausgestattet ist und in einem gegenüberliegenden, vorderen Spreizabschnitt (5) durch axiale Schlitze voneinander getrennte Spreizlappen (6) besitzt, die durch axiales Auftreiben der Spreizhülse (2) auf einen das Vorderende der Spreizhülse (2) überragenden Spreizkörper (12), der sich in Setzrichtung (S) im wesentlichen konisch erweitert und in der Durchgangsbohrung (10) gehalten ist, radial ausstellbar sind, **dadurch gekennzeichnet,** dass die Durchgangsbohrung (9, 10) gestuft ausgebildet ist und im Spreizabschnitt (5) einen kleineren Innendurchmesser (s) aufweist als in dem mit dem Innengewinde (4) versehenen, rückwärtigen Abschnitt (3), wobei am Übergang vom rückwärtigen Abschnitt (3) zum vorderen Spreizabschnitt (5) eine im wesentlichen zum rückwärtigen Ende der Spreizhülse (2) gerichtete, umlaufende Ringschulter (11) ausgebildet ist, und der in der Durchgangsbohrung (10) gehaltene, aussenliegende Spreizkörper (12) eine axiale Gesamtlänge (I) aufweist, die grösser ist als die Länge (k) des Spreizabschnitts (5) der Spreizhülse (2).

2. Spreizdübel nach Anspruch 1, dadurch gekennzeichnet, dass der Innendurchmesser (r) der Durchgangsbohrung (9) im rückwärtigen Abschnitt (3) zum Innendurchmesser (s) der Durchgangsbohrung (10) im Spreizabschnitt (5) ein Verhältnis von etwa 1,3 bis etwa 6 aufweist.

3. Spreizdübel nach Anspruch 1 oder 2, dadurch gekennzeichnet, dass die umlaufende Ringschulter (11) eine ebene Fläche oder eine Kegelfläche ist, deren achsferner Bereich dem rückwärtigen Abschnitt (3) näher liegt als der achsnächste Bereich.

4. Spreizdübel nach einem der vorangehenden Ansprüche, dadurch gekennzeichnet, dass die Gesamtlänge (I) des Spreizkörpers (12) etwa das 1-fache bis 5-fache der Differenz der erforderlichen Bohrtiefe (d) und der Länge (h) der Spreizhülse (2) beträgt, wobei die Länge der Spreizhülse etwa das 1-fache bis 12-fache des Innendurchmessers (r) der Durchgangsbohrung (9) im rückwärtigen Abschnitt (3) beträgt und die erforderliche Bohrtiefe (d) grösser ist als die Länge (h) der Spreizhülse (2) und etwa das 2-fache bis 14-fache des Innendurchmessers (r) der Durchgangsbohrung (9) im rückwärtigen Abschnitt (3) beträgt.

5. Spreizdübel nach Anspruch 4, dadurch gekennzeichnet, dass der Spreizkörper (12) eine im wesentlichen flaschenartige Gestalt mit wenigstens zwei Konusabschnitten (13, 14) aufweist, die voneinander verschiedene Konuswinkel besitzen, wobei der durchmesserkleinere Konusabschnitt (13) einen grösseren Konuswinkel aufweist als der daran anschliessende durchmessergrössere Konusabschnitt (14).

6. Spreizdübel nach Anspruch 5, dadurch gekennzeichnet, dass der durchmesserkleinere Konusabschnitt (13) mit einem Konuszapfen (15) verbunden ist, dessen axiale Länge (c) kleiner ist als die Länge (a) des durchmesserkleineren Konusabschnitts (13), und der im wesentlichen einen Aussendurchmesser (t) aufweist, der kleiner oder gleich dem Innendurchmesser (s) der Durchgangsbohrung im Spreizabschnitt (5) ist.

7. Spreizdübel nach Anspruch 6, dadurch gekennzeichnet, dass der Konuszapfen (15) eine konvexe, beispielsweise ballige, Aussenkontur aufweist.

8. Spreizdübel nach einem der Ansprüche 5 - 7, dadurch gekennzeichnet, dass der Spreizabschnitt (5) wenigstens zwei Biegestellen aufweist, die als umlaufende Ringnuten (8) ausgebildet sind.

9. Spreizdübel nach Anspruch 8, dadurch gekennzeichnet, dass der Spreizabschnitt (5) im Bereich der Ringnuten (8) eine Restwandstärke (w) aufweist, die etwa 10% bis etwa 150% des Bohrungsdurchmessers im Spreizbereich beträgt.

10. Spreizdübel nach Anspruch 8 oder 9, dadurch gekennzeichnet, dass die umlaufenden Ringnuten (8) an der äusseren Umfangsfläche des Spreizabschnitts (5) vorgesehen sind.
